# EUROPÄISCHE PATENTSCHRIFT

(11) **EP 1 502 448 B1**
(45) Veröffentlichungstag und Bekanntmachung des Hinweises auf die Patenterteilung: **16.03.2011**
(21) Anmeldenummer: 03749839.1
(22) Anmeldetag: 30.04.2003
(51) Int. Cl.: H04Q 3/00

(54) **VERFAHREN ZUM ERFASSEN VON ANRUFEN UND ZUGEHÖRIGE EINHEITEN**
METHOD FOR DETECTING CALLS AND CORRESPONDING UNITS
PROCEDE POUR DETECTER DES APPELS ET UNITES ASSOCIEES

(30) Priorität: 07.05.2002 DE 10220338
(43) Veröffentlichungstag der Anmeldung: 02.02.2005
(60) Teilanmeldung: 08013774.8
(73) Patentinhaber: SIEMENS AKTIENGESELLSCHAFT, 80333 München (DE)
(72) Erfinder: HOFFMANN, Klaus, 81735 München (DE)
(86) Internationale Anmeldenummer: PCT/DE2003/001398
(87) Internationale Veröffentlichungsnummer: WO 2003/096711

(56) Entgegenhaltungen:
- EP-A- 0 792 074
- WO-A-02/15627
- THERNELIUS F: "SIP, NAT, and Firewalls" INTERNET, Mai 2000 (2000-05), XP002209773 Gefunden im Internet: <URL:http://www.cs.columbia.edu/sip/drafts /Ther0005_SIP.pdf> [gefunden am 2002-08-13]

## Beschreibung

Die Erfindung betrifft ein Verfahren, bei dem von einem rufenden Endgerät über eine Signalisierungseinheit an ein gerufenes Endgerät eine Rufanforderung gerichtet wird, um eine Datenübertragung zwischen den Endgeräten zu ermöglichen. Zwischen dem rufenden Endgerät und dem gerufenen Endgerät werden dann Nutzdaten übertragen, z.B. Gesprächsdaten. Beispielsweise wird während der Datenübertragung oder im Zusammenhang mit der die Datenübertragung betreffenden Signalisierung wird von dem gerufenen Endgerät an die Signalisierungseinheit eine Erfassungsanforderung gerichtet. Beispielsweise auf Grund der Erfassungsanforderung vermerkt die Signalisierungseinheit ein Kennzeichen des rufenden Endgerätes, beispielsweise wird das Kennzeichen gespeichert, die Speicherung des Kennzeichens veranlasst oder das Kennzeichen wird auf einer Ausgabeeinheit ausgegeben.

Für durchschaltevermittelte Datenübertragungsnetze ist ein solches Verfahren im Standard ITU-T (International Telecommunication Union - Telecommunication Standardization Sector) - Q.951.7, "Stage 3 description for number identification supplementary services using DSS 1: Malicious Call Identification (MCID)" festgelegt. Das Leistungsmerkmal wird insbesondere im Zusammenhang mit der Vorbereitung gerichtlicher Verfahren genutzt.

In einem durchschaltevermittelten Datenübertragungsnetz werden die Daten in Zeitkanälen gemäß einem Zeitmultiplexverfahren übertragen. Vor der Übertragung der Daten werden die Zeitkanäle in einer Verbindungsaufbauphase durchgeschaltet und bleiben dann für die Dauer des Rufes für die am Ruf beteiligten Endgeräte reserviert. Die Daten sind beispielsweise Gesprächsdaten oder Videodaten, wie sie bei einer Videokonferenzschaltung erzeugt werden.

Das Kennzeichen ist bei dem bekannten Verfahren eine Rufnummer, deren Aufbau im Standard ITU-T E.164 festgelegt ist. Unter der Rufnummer ist das rufende Endgerät, d.h. das Endgerät, das den Ruf aussendet, im durchschaltevermittelten Datenübertragungsnetz erreichbar.

Die Signalisierungseinheiten sind bei dem bekannten Verfahren Vermittlungsstellen eines öffentlichen Telefonnetzes. Die Signalisierungseinheiten signalisieren gemäß einem standardisierten Protokoll, insbesondere gemäß ISUP (Integrated Services digital network - User Part). Bei den bekannten Verfahren befinden sich immer beide Endgeräte im durchschaltevermittelten Datenübertragungsnetz.

Ein Beispiel ist aus EP0792074 bekannt.

Es ist Aufgabe der Erfindung, ein einfaches Verfahren anzugeben, mit dem sich insbesondere der Anwendungsbereich des Leistungsmerkmals "Erfassen von Anrufen" erweitert. Außerdem sollen ein zugehöriges Endgerät, eine zugehörige Signalisierungseinheit und zugehörige Programme angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Beim erfindungsgemäßen Verfahren ist das gerufene Endgerät ein Endgerät eines Datenpaketübertragungsnetzes. Außerdem signalisiert die Signalisierungseinheit gemäß einem Signalisierungsprotokoll, das für eine Datenübertragung in einem Datenübertragungsnetz festgelegt worden ist.

In einem Datenpaketübertragungsnetz werden die Daten in Datenpaketen übertragen, die üblicherweise einen Paketkopf und einen Pakethauptteil haben. Im Paketkopf befinden sich Angaben über den Empfänger des Datenpaketes. Damit lassen sich die Datenpakete im Datenpaketübertragungsnetz weiterleiten, ohne dass auch auf unteren Protokollebenen eine Verbindung hergestellt werden muss. Ein Beispiel für ein Datenpaketübertragungsnetz ist ein gemäß Internetprotokoll arbeitendes Datenpaketübertragungsnetz, z.B. das Internet. Jedoch gibt es auch andere Datenpaketübertragungsnetze, wie z.B. das ATM-Netz (Asynchronous Transfer Mode), in welchem die Datenpakete auch als Zellen bezeichnet werden.

Beispiele für Signalisierungsprotokolle in Datenpaketübertragungsnetzen sind:
- die Protokolle der ITU-T H.323-Protokollfamilie, insbesondere das Protokoll H.225,
- das SIP-Protokoll (Session Initiation Protocol) gemäß RFC 2543 bzw. RFC 2543bis der IETF (Internet Engineering Task Force), oder
- ein ATM-Signalisierungsprotokoll.

Die Signalisierungsprotokolle für eine Datenübertragung in einem Datenpaketübertragungsnetz unterscheiden sich erheblich von den Signalisierungsprotokollen für ein durchschaltevermitteltes Datenübertragungsnetz und wurden bisher weitgehend unabhängig von diesen Signalisierungsprotokollen festgelegt.

Durch das erfindungsgemäße Verfahren wird erreicht, dass das Leistungsmerkmal "Erfassen von Anrufen" nun auch dann eingesetzt werden kann, wenn sich das gerufene Endgerät in einem Datenpaketübertragungsnetz befindet. Der Anwendungsbereich des Leistungsmerkmals "Erfassen von Anrufen" wird damit erheblich erweitert, weil ein großer Anteil von Endgeräten an Datenpaketübertragungsnetze angeschlossen ist. Der Anteil dieser Endgeräte an der Gesamtzahl von Endgeräten in durchschaltevermittelten Datenübertragungsnetzen und in Datenpaketübertragungsnetzen steigt weiter.

Bei einer Weiterbildung wird die Erfassungsanforderung mit einer Nachricht und/oder mit einem Informationselement übertragen, die für die Signalisierung im Datenpaketübertragungsnetz festgelegt worden ist. Bei der Weiterbildung wird eine Erfassungsanforderung verwendet, die zusätzlich für das betreffende Signalisierungsprotokoll der Signalisierungseinheit festgelegt werden musste.

Bei einer alternativen Weiterbildung wir vorzugsweise in der Signalisierungseinheit ein Kennzeichen für das gerufene Endgerät im Zusammenhang mit dem Leistungsmerkmal "generelles Erfassen von Anrufen" gespeichert. Beim Eintreffen der Rufanforderung wird durch die Signalisierungseinheit (44) geprüft, ob das Kennzeichen des zu rufenden Endgerätes gespeichert worden ist. Das Kennzeichen des rufenden Endgerätes wird vermerkt, wenn das Kennzeichen des zu rufenden Endgerätes (36) gespeichert worden ist. Damit muss bei dieser Weiterbildung keine separate Erfassungsanforderung festgelegt und mit Bezug auf einzelne Anrufe erzeugt werden.

Bei einer Weiterbildung des erfindungsgemäßen Verfahrens wird das Kennzeichen in Zusammenhang mit der Rufanforderung zu der Signalisierungseinheit übermittelt. Diese Maßnahme ermöglicht es, das Kennzeichen zu vermerken, ohne dass es vorher durch ein aufwendigeres Verfahren angefordert werden muss.

Bei einer nächsten Weiterbildung des Verfahrens zum Erfassen von Anrufen ist das rufende Endgerät ein Endgerät eines durchschaltevermittelten Datenübertragungsnetzes. Das Kennzeichen des rufenden Endgerätes wird aufgrund der Erfassungsanforderung von der Signalisierungseinheit über eine zur Signalisierung dienende Netzübergangseinheit zum durchschaltevermittelten Datenübertragungsnetz mit Hilfe einer Kennzeichenanforderung angefordert. Zur Bearbeitung der Kennzeichenanforderung im durchschaltevermittelten Datenübertragungsnetz wird ein standardisiertes Verfahren eingesetzt, insbesondere ein Verfahren gemäß Standard ITU-T Q.731.7, "Stage 3 description for number identification supplementary services using signalling System No.7: Malicious Call Identification (MCID)".

Alternativ oder kumulativ wird zur Übertragung der Kennzeichenanforderung ein Verfahren gemäß BICC-Standard (Bearer Independent Call Control) Leistungsmerkmalssatz Zwei (CS2 - Capability Set) eingesetzt, siehe ITU-T Q.1902.1 bis Q.1902.6. Bei einer nächsten Alternative wird die Kennzeichenanforderung gemäß dem Protokoll SIP-T (SIP for Telephones) in Übereinstimmung mit dem RFC 3204 der IETF (Internet Engineering Task Force) übertragen.

Die Verwendung der genannten Standards bietet die Möglichkeit, dass im Wesentlichen nur noch Verfahrensschritte zum Anfordern des Kennzeichens zwischen der Netzübergangseinheit und der Signalisierungseinheit neu festgelegt werden müssen. Beim Übermitteln des Kennzeichens bis zur Netzübergangseinheit kann zum großen Teil oder vollständig auf bereits festgelegte Verfahren zurückgegriffen werden.

Auch der ISUP-Standard lässt sich so erweitern, dass er für die Signalisierung bei einer Datenübertragung von einem Telefonnetz über ein Datenpaketübertragungsnetz zu einem Telefonnetz geeignet ist. Diese Erweiterung ist auch nutzbar, wenn sich das eine Endgerät in dem Datenpaketübertragungsnetz befindet.

Bei einer anderen Weiterbildung des erfindungsgemäßen Verfahrens ist das rufende Endgerät ein Endgerät eines Datenpaketübertragungsnetzes. Die Signalisierungseinheit oder eine andere Signalisierungseinheit prüft die Zugangsberechtigung des rufenden Endgerätes zum Datenpaketübertragungsnetz. Signalisierungseinheiten, welche solche Prüfungen ausführen, werden beispielsweise als Proxy oder als Gatekeeper bezeichnet. Durch die Prüfung der Zugangsberechtigung des rufenden Endgerätes werden Manipulationen an dem vom rufenden Endgerät übermittelten Kennzeichen erschwert. Das vermerkte Kennzeichen stimmt so mit einer hohen Wahrscheinlichkeit mit dem tatsächlichen Kennzeichen des rufenden Endgerätes überein.

Bei einer nächsten Weiterbildung wird die Erfassungsanforderung in einer INFO-Nachricht mit dem INFO-Verfahren gemäß Defacto-Standard RFC 2976 der IETF übertragen. Die INFO-Nachricht wird auch als Request, d.h. als Anforderung bezeichnet. Ein Kopfteil (header) der INFO-Nachricht oder ein Hauptteil (body) der INFO-Nachricht enthält ein Informationselement, mit dem die Erfassungsanforderung eindeutig gekennzeichnet wird, beispielsweise ein Informationselement "Ausdruck", mit dem der Ausdruck des Kennzeichens in der Signalisierungseinheit angefordert wird. Bei dieser Weiterbildung wird auf die bereits festgelegte INFO-Nachricht zurückgegriffen. Damit müssen zur Implementierung des Verfahrens in Signalisierungseinheiten und Endgeräten nur kleine Ergänzungen vorgenommen werden.

Bei einer anderen Weiterbildung wird die Erfassungsaufforderung in einer Nachricht mit einem für die Erfassung von Anrufen festgelegten Verfahren gemäß einem RFC übertragen. Das Festlegen eines zusätzlichen RFC ist insbesondere dann sinnvoll, wenn noch mehrere Informationselemente benötigt werden, die mit dem Verfahren zum Erfassen von Anrufen in Zusammenhang stehen.

Bei einer Ausgestaltung ist das Auftreten der Nachricht selbst bereits die Anforderung, so dass keine zusätzlichen Informationselemente in der Nachricht zum Kennzeichnen der Erfassungsanforderung enthalten sind. Alternativ enthält die Nachricht jedoch in ihrem Kopfteil (header) oder in ihrem Hauptteil (body) ein Informationselement, das die Erfassungsanforderung eindeutig kennzeichnet.

Bei einer Weiterbildung werden neben dem Kennzeichen des rufenden Endgerätes noch die folgenden Daten vermerkt:
- das Kennzeichen des gerufenen Endgerätes,
- bei einer Rufumleitung die Kennzeichen aller an der Rufumleitung beteiligten Endgeräte,
- das Datum und die Uhrzeit der Datenübertragung,
- Kennzeichen für die bei der Rufbearbeitung beteiligten Signalisierungseinheiten, und
- Kennzeichen, die bei der Übertragung der Nutzdaten relevant sind, z.B. eine IP-Adresse und die zugehörige RTP-Portnummer (Real Time Protocol) der Netzübergangseinheit 28 und/oder des Endgerätes 36.

Durch die Speicherung der zusätzlichen Daten wird das Leistungsmerkmal "Erfassen von Anrufen" aufgewertet.

Die Erfindung betrifft außerdem ein Endgerät und eine Signalisierungseinheit, die zum Ausführen des erfindungsgemäßen Verfahrens bzw. einer seiner Weiterbildungen geeignet sind. Weiterhin sind Programme betroffen, die in dem Endgerät bzw. in der Signalisierungseinheit ausgeführt werden und zur Durchführung des erfindungsgemäßen Verfahrens bzw. einer seiner Weiterbildungen dienen. Demzufolge gelten für das Endgerät, für die Signalisierungseinheit und für die Programme die oben genannten technischen Wirkungen.

Im Folgenden werden Ausführungsbeispiele der Erfindung an Hand der beiliegenden Zeichnungen erläutert. Darin zeigen:
- Figur 1: Einheiten eines Telefonnetzes und des Internets für die Datenübertragung zwischen einem Telefon und ei- nem SIP-Endgerät sowie für die zugehörige Signali- sierung,
- Figur 2: Einheiten des Internets für die Datenübertragung zwischen zwei SIP-Endgeräten sowie für die zugehö- rige Signalisierung, und
- Figur 3: im Internet übertragene Nachrichten zum Nutzen des Leistungsmerkmals "Erfassen eines Anrufes".

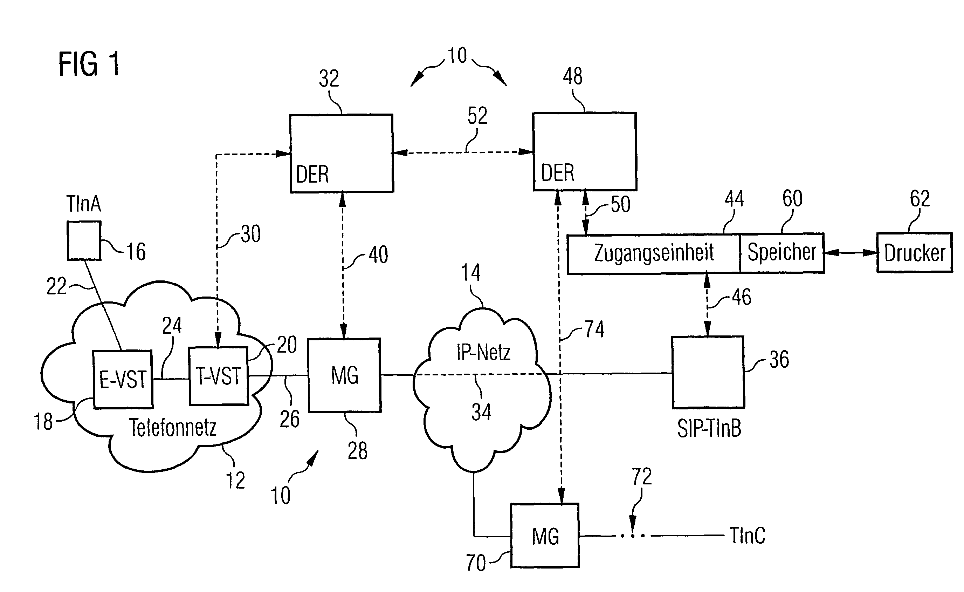

Figur 1 zeigt eine Netzübergangsfunktion 10 zwischen einem Telefonnetz 12 und einem Datenpaketübertragungsnetz 14, z.B. dem Internet. Das Telefonnetz 12 ist beispielsweise das Telefonnetz der Deutschen Telekom AG. In Figur 1 sind ein Telefon 16 eines rufenden Teilnehmers TlnA, eine Ursprungsvermittlungsstelle 18 und eine Transitvermittlungsstelle 20 des Telefonnetzes 12 dargestellt. Zwischen dem Endgerät 16 und der Ursprungsvermittlungsstelle 18 liegt eine Teilnehmeranschlussleitung 22.

Die Ursprungsvermittlungsstelle 18 ist mit der Transitvermittlungsstelle 20 über eine PCM-30-Übertragungsstrecke 24 verbunden. Die Gesprächsdaten werden in einem Zeitkanal übertragen, und die Signalisierung wird gemäß ISUP-Protokoll ausgeführt. Die Ursprungsvermittlungsstelle 18 und die Transitvermittlungsstelle 20 sind beispielsweise herkömmliche Vermittlungsstellen vom Typ EWSD der Firma Siemens AG.

Von der Transitvermittlungsstelle 20 führt eine PCM-30-Übertragungsstrecke 26 zum Übertragen der Nutzdaten zu einer Netzübergangseinheit 28, die einen Teil der Netzübergangsfunktion 10 erbringt. Eine Signalisierungsverbindung 30 liegt zwischen der Transitvermittlungsstelle 20 und einem Diensterbringungsrechner 32, der ebenfalls einen Teil der Netzübergangsfunktion 10 erbringt. Auf der Signalisierungsverbindung 30 wird gemäß ISUP-Protokoll signalisiert. Die Netzübergangseinheit 28 ist bspw. eine Netzübergangseinheit vom Typ hiG 1000 der Firma SIEMENS AG. Der Diensterbringungsrechner 32 ist ein Diensterbringungsrechner vom Typ hiQ 9200 der Firma SIEMENS AG.

Die Netzübergangseinheit 28 entnimmt Sprachdaten, die in einem PCM-Kanal der Übertragungsstrecke 26 empfangen werden aus dem PCM-Kanal und verpackt diese in Datenpakete, die im Datenpaketübertragungsnetz 14 weitergeleitet werden, z.B. über einen Übertragungsweg 34, der von der Netzübergangseinheit 28 durch das Datenübertragungsnetz 14 zu einem SIP-Endgerät 36 eines Teilnehmers TlnB führt. Das Endgerät 36 arbeitet gemäß dem Protokoll SIP, siehe Defacto-Standard RFC 2543. Andererseits werden in der Netzübergangseinheit 28 aus dem Datenpaketübertragungsnetz 14 empfangene Datenpakete entpackt. Die in den Datenpaketen enthaltenen Nutzdaten werden in einem Zeitkanal auf der Übertragungsstrecke 26 weitergeleitet.

Der Diensterbringungsrechner 32 steuert die Netzübergangseinheit 28 mit Hilfe des Protokolls MGCP (Media Gateway Control Protocol), siehe RFC 2705 der IETF. Dabei erzeugte Steuernachrichten werden über einen Übertragungsweg 40 übertragen, der beispielsweise durch das Internet verläuft.

Dem Endgerät 36 ist eine Zugangseinheit 44 zugeordnet, die auch als Proxy-Einheit bezeichnet wird. Die Zugangseinheit 44 prüft die Zugangsberechtigung des Endgerätes 36 und stellt SIP-Dienste zur Verfügung, insbesondere den Dienst zur Erbringung des Leistungsmerkmals "Erfassen eines Anrufes". Die Zugangseinheit 44 ist bspw. eine Zugangseinheit vom Typ hiQ 6200 der Firma SIEMENS AG.

Zwischen dem Endgerät 36 und der Zugangseinheit 44 liegt ein Signalisierungsweg 46, beispielsweise in einem lokalen Datenübertragungsnetz. Über den Signalisierungsweg 46 werden Nachrichten gemäß SIP-Protokoll ausgetauscht.

Andererseits liegt zwischen der Zugangseinheit 44 und einem Diensterbringungsrechner 48 ein Signalisierungsweg 50, über den Signalisierungsnachrichten beispielsweise ebenfalls gemäß Protokoll SIP übertragen werden. Auch der Diensterbringungsrechner 48 ist bspw. ein Diensterbringungsrechner vom Typ hiQ 9200 der Firma SIEMENS AG.

Zwischen den beiden Diensterbringungsrechnern 32 und 48 liegt ein Signalisierungsweg 52, auf dem Signalisierungsnachrichten gemäß BICC-Standard (Bearer Independent Call Control) übertragen werden. Gegebenenfalls wird in den Signalisierungsweg 52 noch ein sogenannter Call-Mediation-Netzknoten gemäß BICC-Standard einbezogen.

Es wird angenommen, dass der Teilnehmer TlnA den Teilnehmer TlnB schon einmal böswillig angerufen hat. Der Teilnehmer TlnB hat daraufhin die Freischaltung des Leistungsmerkmals "Erfassen eines Anrufs auf Anforderung" bei seinem SIP-Dienstanbieter beantragt. Das Leistungsmerkmal wurde in der Zugangseinheit 44 für den Teilnehmer TlnB freigeschaltet.

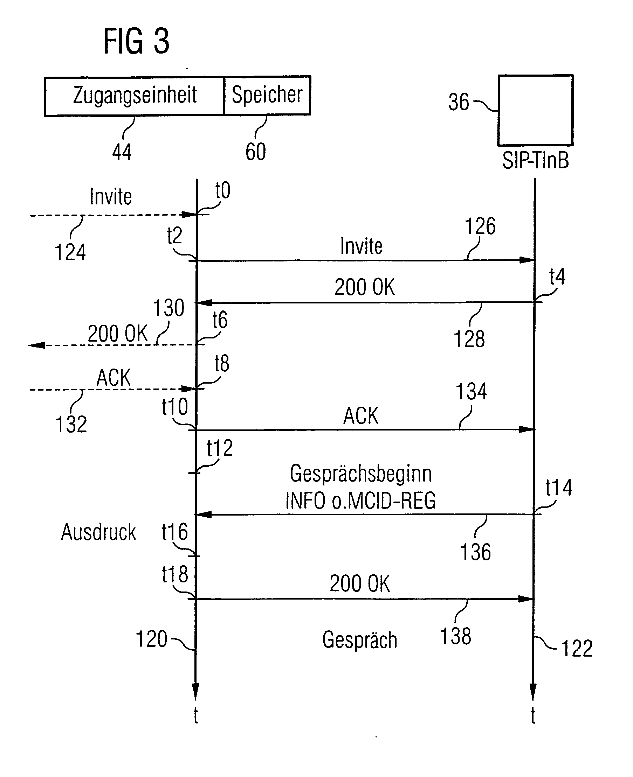

Zur Erbringung des Leistungsmerkmals "Erfassen von Anrufen" enthält die Zugangseinheit 44 eine Speichereinheit 60, in der sich die erfassten Daten dauerhaft speichern lassen sowie einen Drucker 62, mit dessen Hilfe sich die erfassten Daten unverzüglich ausdrucken lassen. Die beim Erbringen des Leistungsmerkmals "Erfassen eines Anrufs auf Anforderung" durchgeführten Verfahrensschritte werden unten an Hand der Figur 3 näher erläutert.

In Figur 1 ist außerdem eine weitere Netzübergangseinheit 70 dargestellt, die zwischen dem Internet 14 und einem Telefonnetz 72 liegt, an dem das Endgerät eines Teilnehmers TlnC angeschlossen ist. Ein Übertragungsweg 74 lässt sich zum Austausch von Steuernachrichten gemäß MGCP nutzen und liegt zwischen der Netzübergangseinheit 70 und dem Diensterbringungsrechner 48.

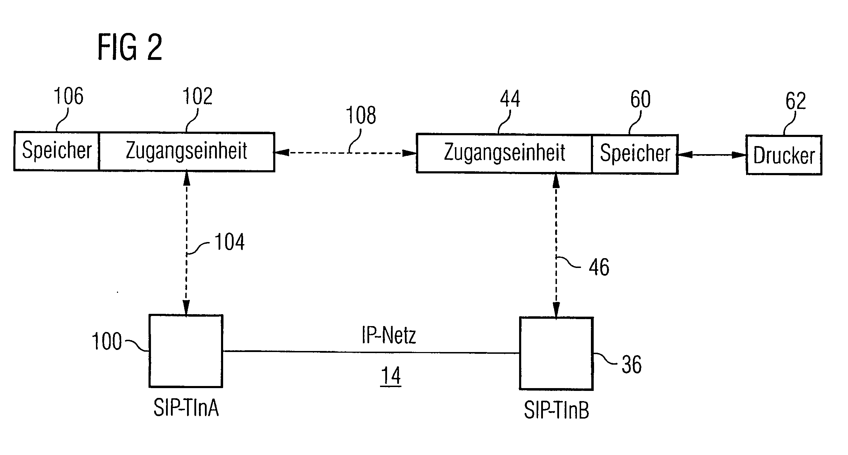

Figur 2 zeigt den Fall, in dem der Teilnehmer TlnA nicht sein Telefon 16, sondern ein SIP-Endgerät 100 nutzt, um den Teilnehmer TlnB anzurufen. Zwischen dem Endgerät 100 und einer Zugangseinheit 102 lassen sich Signalisierungsnachrichten über einen Signalisierungsweg 104 gemäß SIP-Protokoll übertragen. Die Zugangseinheit 102 ist ebenfalls eine Proxy-Einheit, die die Zugangsberechtigung des Endgerätes 100 zum Datenübertragungsnetz 14 prüft. Die Zugangseinheit 102 enthält eine Speichereinheit 106.

Zwischen der Zugangseinheit 102 und der Zugangseinheit 44 liegt ein Signalisierungsweg 108, auf dem Signalisierungsnachrichten gemäß SIP-Protokoll übertragen werden.

Figur 3 zeigt im Datenübertragungsnetz 14 übertragene Nachrichten beim Nutzen des Leistungsmerkmals "Erfassen eines Anrufes auf Anforderung". Die an Hand der Figur 3 erläuterten Nachrichten werden unabhängig davon ausgetauscht, ob der Teilnehmer TlnA vom Telefon 16 oder vom SIP-Endgerät 100 aus anruft. Im ersten Fall wird der Diensterbringungsrechner 48 einbezogen. Ruft der Teilnehmer TlnA dagegen vom SIP-Endgerät 100 aus an, so wird die Zugangseinheit 102 einbezogen.

In Figur 3 werden Vorgänge, die sich auf die Zugangseinheit 44 beziehen, mit Hilfe eines Zeitstrahls 120 dargestellt. Vorgänge, die sich auf das Endgerät 36 beziehen, werden mit Hilfe eines Zeitstrahls 122 dargestellt. Auf den Zeitstrahlen 120 und 122 liegen spätere Zeitpunkte weiter unten als frühere Zeitpunkte.

Wenn der Teilnehmer TlnA den Teilnehmer TlnB anruft, wird zu einem Zeitpunkt t0 in der Zugangseinheit 44 eine Invite-Nachricht 124 empfangen, die von dem Diensterbringungsrechner 48 bzw. von der Zugangseinheit 102 kommt. Die Invite-Nachricht 124 wird in der Zugangseinheit 44 gemäß SIP-Protokoll bearbeitet, so dass zu einem Zeitpunkt t2 eine Invite-Nachricht 126 von der Zugangseinheit 44 zum Endgerät 36 gesendet wird. Die Invite-Nachricht enthält auch die Rufnummer des Telefons 16 bzw. die Internetadresse und die Portadresse des Endgerätes 100. Die Rufnummer des Telefons 16 bzw. das Kennzeichen des Endgerätes 100 werden für die Dauer der Rufbearbeitung in einem Arbeitsspeicher der Speichereinheit 60 gespeichert.

Im Endgerät 36 wird die Invite-Nachricht 126 ebenfalls gemäß SIP-Protokoll bearbeitet. Protokollgemäß wird zu einem Zeitpunkt t4 vom Endgerät 36 eine 200-OK-Nachricht 128 an die Zugangseinheit 44 als Bestätigung gesendet.

Die Zugangseinheit 44 sendet nach dem Empfang der Nachricht 128 protokollgemäß zu einem Zeitpunkt t6 eine 200-OK-Nachricht 130 an den Diensterbringungsrechner 48 bzw. an die Zugangseinheit 102. Von der Seite des Diensterbringungsrechners 48 bzw. der Zugangseinheit 102 trifft zu einem Zeitpunkt t8 protokollgemäß eine ACK-Nachricht 132 ein, mit der bestätigt wird, dass die Datenübertragungsverbindung genutzt werden kann.

Zu einem Zeitpunkt t10 sendet die Zugangseinheit 44 aufgrund der Nachricht 132 protokollgemäß eine ACK-Nachricht 134 an das Endgerät 36.

Zu einem Zeitpunkt t12 beginnen die Teilnehmer TlnA und TlnB miteinander zu sprechen, wobei Gesprächsdaten zwischen dem Telefon 16 und dem Endgerät 36 bzw. zwischen dem Endgerät 100 und dem Endgerät 36 übertragen werden. Der Teilnehmer TlnB erkennt die Stimme des böswilligen Teilnehmers TlnA wieder und drückt eine Funktionstaste an seinem Endgerät, die mit der Funktion "Erfassen eines Anrufs auf Anforderung" verknüpft ist. Daraufhin erzeugt das Endgerät 36 zu einem Zeitpunkt t14 automatisch eine INFO-Nachricht 136 gemäß RFC 2976. Die Nachricht 136 enthält ein nutzerspezifisches Informationselement "Ausdruck".

Die INFO-Nachricht 136 wird in der Zugangseinheit 44 empfangen und ausgewertet. Aufgrund des Informationselementes "Ausdruck" wird zu einem Zeitpunkt t16 die in der Zugangseinheit 44 bekannte Rufnummer des Teilnehmers TlnA bzw. das Kennzeichen des Endgerätes 100 in einem nichtflüchtigen Speicher der Speichereinheit 60 dauerhaft gespeichert, bspw. in einer Datei gemeinsam mit anderen Kennzeichen, die für andere Teilnehmer bzw. nur für den Teilnehmer TlnB im Zusammenhang mit dem Leistungsmerkmal "Erfassen eines Anrufs auf Anforderung" zu speichern sind. Gleichzeitig wird dieses Kennzeichen auf dem Drucker 62 ausgedruckt. Dauerhaft bedeutet, dass die Daten auch nach dem Ende des Gespräches zwischen dem TlnA und dem Teilnehmer TlnB vermerkt bleiben bis sie Ausgedruckt werden, um dann zum Beispiel in einem gerichtlichen Verfahren als Beweismittel zu dienen.

Zu einem Zeitpunkt t18 bestätigt die Zugangseinheit 44 die INFO-Nachricht 136 mit Hilfe einer 200-OK-Nachricht 138. Anschließend wird das Gespräch zwischen den Teilnehmern TlnA und TlnB fortgesetzt oder der Teilnehmer TlnB beendet das Gespräch sofort.

Bei einem anderen Ausführungsbeispiel wird an Stelle der INFO-Nachricht 136 eine eigens für das Leistungsmerkmal "Erfassen eines Anrufs auf Anforderung" festgelegtes SIP-Nachricht "MCID-REG" gesendet. Auch die MCID-REG-Nachricht führt zu einem Erfassen und dauerhaft Vermerken der Rufnummer des Telefons 16 bzw. der Internetadresse des Endgerätes 100.

An Stelle des Signalisierungsprotokolls auf den Übertragungswegen 40 und 74 lässt sich bspw. auch das Signalisierungsprotokoll ITU-T H.248 einsetzen.

An Stelle des in Figur 1 erläuterten Verfahrens zur Datenübertragung zwischen dem Telefonnetz 12 und dem Internet 14 lässt sich auch ein anderes Verfahren einsetzen, beispielsweise lassen sich die Aufgaben des Diensterbringungsrechners 48 auch vom Diensterbringungsrechner 32 mit erbringen.

An Stelle des an Hand der Figur 2 erläuterten Verfahrens lassen sich ebenfalls andere Verfahren einsetzen. Beispielsweise können zwischen den Zugangseinheiten 102 und 44 noch weitere Zugangseinheiten in die Signalisierung einbezogen werden. Auch lassen sich die Nutzdaten mit Hilfe der Zugangseinheiten 102, 44 bzw. der weiteren Zugangseinheiten übertragen.

Bei einem nächsten Ausführungsbeispiel wird das Leistungsmerkmal "generelles Erfassen von Anrufen" durch den Dienstanbieter für den Teilnehmer TlnB freigeschaltet, beispielsweise auf dessen Antrag hin. Das Kennzeichen des Endgerätes 36 wird in einer Datei vermerkt. Beim Eintreffen eins Anrufes wird dass Kennzeichen des zu rufenden Endgerätes ermittelt. Die Datei wird nach diesem Kennzeichen durchsucht. Ist das Kennzeichen in der Datei enthalten, so wird das Kennzeichen des rufenden Endgerätes vermerkt, z.B. gespeichert und/oder ausgedruckt. Ist das Kennzeichen dagegen nicht in der Datei enthalten, so wird das Kennzeichen des rufenden Endgerätes nicht dauerhaft vermerkt. Der Rufaufbau wird unabhängig vom Prüfergebnis durchgeführt. Bei diesem Ausführungsbeispiel wird keine Erfassungsanforderung vom Teilnehmer TlnB benötigt, um die Rufnummer des rufenden Endgerätes dauerhaft zu vermerken.

## Patentansprüche

1. Verfahren zum Erfassen von Anrufen,
bei dem von einem rufenden Endgerät (16, 100) über eine Signalisierungseinheit (44) an ein gerufenes Endgerät (36) eine Rufanforderung (124) gerichtet wird, um eine Datenübertragung zwischen den Endgeräten (16, 100; 36) zu ermöglichen,
bei dem zwischen dem rufenden Endgerät (16, 100) und dem gerufenen Endgerät (36) Nutzdaten übertragen werden,
**dadurch gekennzeichnet,**
**dass** die Signalisierungseinheit (44) ein Kennzeichen des rufenden Endgerätes (16, 100) vermerkt, insbesondere das Kennzeichen in einer Speichereinheit (60) speichert, die Speicherung veranlasst oder das Kennzeichen auf einer Ausgabeeinheit (62) ausgibt,
**dass** das gerufene Endgerät (36) ein Endgerät eines Datenpaketübertragungsnetzes (14) ist,
und **dass** die Signalisierungseinheit (44) gemäß einem für eine Datenübertragung in einem Datenpaketübertragungsnetz (14) festgelegten Signalisierungsprotokoll signalisiert.

2. Verfahren nach Anspruch 1,
**dadurch gekennzeichnet,**
**dass** während der Datenübertragung oder im Zusammenhang mit der die Datenübertragung betreffenden Signalisierung von dem gerufenen Endgerät (36) an die Signalisierungseinheit (44) eine Erfassungsanforderung (136) gerichtet wird,
**dass** die Signalisierungseinheit (44) aufgrund der Erfassungsanforderung (136) das Kennzeichen vermerkt,
und **dass** die Erfassungsanforderung (136) mit einer Nachricht und/oder mit einem Informationselement übertragen wird, die für die Signalisierung im Datenpaketübertragungsnetz (14) festgelegt worden ist.

3. Verfahren nach Anspruch 1 , **dadurch gekennzeichnet, dass** ein Kennzeichen für das gerufene Endgerät gespeichert wird,
dass beim Eintreffen der Rufanforderung durch die Signalisierungseinheit (44) geprüft wird, ob das Kennzeichen des zu rufenden Endgerätes gespeichert worden ist,
und dass das Kennzeichen des rufenden Endgerätes vermerkt wird, wenn das Kennzeichen des zu rufenden Endgerätes (36) gespeichert worden ist.

4. Verfahren nach Anspruch 1 oder 2,
**dadurch gekennzeichnet,**
**dass** das Kennzeichen des rufenden Endgerätes (16, 100) im Zusammenhang mit der Rufanforderung (124) zu der Signalisierungseinheit (44) übermittelt wird.

5. Verfahren nach einem der Ansprüche 1 bis 3,
**dadurch gekennzeichnet,**
**dass** das rufende Endgerät (16) ein Endgerät eines durchschaltevermittelten Datenübertragungsnetzes (12) ist,
und/oder dass das Kennzeichen des rufenden Endgerätes (16) aufgrund der Erfassungsanforderung (136) von der Signalisierungseinheit (44) über eine Netzübergangseinheit (48) zum durchschaltevermittelten Datenübertragungsnetz (12) mit Hilfe einer Kennzeichenanforderung angefordert wird,
und/oder dass zur Bearbeitung der Kennzeichenanforderung im durchschaltevermittelten Datenübertragungsnetz (12) ein standardisiertes Verfahren eingesetzt wird, insbesondere gemäß Standard ITU-T Q.731.7,
und/oder das die Kennzeichenanforderung gemäß mindestens einem der Standards Q.1902.1 bis Q.1.902.6 und/oder gemäß SIP-T übertragen wird.

6. Verfahren nach einem der Ansprüche 1 bis 4,
**dadurch gekennzeichnet,**
**dass** das rufende Endgerät (100) ein Endgerät eines Datenpaketübertragungsnetzes (14) ist,
und **dass** die Signalisierungseinheit (44) oder eine andere Signalisierungseinheit (102) die Zugangsberechtigung des rufenden Endgerätes (100) zum Datenpaketübertragungsnetz (14) prüft.

7. Verfahren nach einem der vorhergehenden Ansprüche,
**dadurch gekennzeichnet,**
**dass** das Signalisierungsprotokoll das Protokoll SIP oder das Protokoll ITU-T H.225 oder ein anderes Signalisierungsprotokoll ist, das für die Signalisierung zwischen dem Endgerät (36) und der Signalisierungseinheit (44) geeignet ist.

8. Verfahren nach einem der vorhergehenden Ansprüche,
**dadurch gekennzeichnet,**
**dass** die Erfassungsanforderung in einer INFO-Nachricht mit dem INFO-Verfahren gemäß RFC 2976 übertragen wird,
und **dass** ein Kopfteil der INFO-Nachricht oder ein Hauptteil der INFO-Nachricht ein Informationselement enthält, mit dem die Erfassungsanforderung (136) eindeutig **gekennzeichnet** wird.

9. Verfahren nach einem der Ansprüche 1 bis 7,
**dadurch gekennzeichnet,**
**dass** die Erfassungsanforderung (136) in einer Nachricht mit einem für die Erfassung von Anrufen festgelegten Verfahren gemäß einem RFC oder gemäß einem erweiterten Protokoll H.225 oder gemäß einem anderen Signalisierungsprotokoll zwischen dem Endgerät (36) und der Signalisierungseinheit (44) übertragen wird.

10. Verfahren nach Anspruch 9,
**dadurch gekennzeichnet,**
**dass** die Nachricht keine zusätzlichen Informationselemente zum Kennzeichnen der Erfassungsanforderung (136) enthält,
oder dass die Nachricht in einem Kopfteil oder in einem Hauptteil ein Informationselement enthält, das die Erfassungsanforderung (136) eindeutig kennzeichnet.

11. Verfahren nach einem der vorhergehenden Ansprüche,
**dadurch gekennzeichnet,**
**dass** neben dem Kennzeichen des rufenden Endgerätes (16, 100) das Kennzeichen des gerufenen Endgerätes (36) vermerkt wird,
und/oder dass bei einer Rufumleitung die Kennzeichen aller an der Rufumleitung beteiligten Endgeräte vermerkt werden,
und/oder dass das Datum und/oder die Uhrzeit vermerkt wird,
und/oder dass mindestens ein Kennzeichen für die bei der Rufbearbeitung beteiligten Signalisierungseinheiten (44, 102) vermerkt wird,
und/oder dass Kennzeichen gespeichert werden, die für die Übertragung der Nutzdaten über das Datenpaketübertragungsnetz (14) relevant sind.

12. Endgerät (36),
mit einer Anschlusseinheit für den Anschluss des Endgerätes (36) an ein Datenpaketübertragungsnetz (14),
und mit einer Steuereinheit, die an eine Signalisierungseinheit (44) Anforderungen richtet,
**dadurch gekennzeichnet,**
**dass** die Steuereinheit eine Funktion enthält, mit der sich auf Veranlassung einer Bedienperson des Endgerätes (36) hin automatisch eine Erfassungsanforderung (136) erzeugen lässt, bei deren Bearbeitung die Signalisierungseinheit (44) ein Kennzeichen eines das Endgerät (36) rufenden Endgerätes (16, 100) vermerkt.

13. Endgerät (36) nach Anspruch 12,
**dadurch gekennzeichnet,**
**dass** das Endgerät (36) mindestens eine weitere Einheit oder Funktion enthält, bei deren Betrieb ein auf das gerufene Endgerät (36) bezogener Verfahrensschritt nach einem der Ansprüche 1 bis 11 ausgeführt wird.

14. Signalisierungseinheit (44),
mit einer Steuereinheit, die gemäß einem Signalisierungsprotokoll signalisiert, das für eine Datenübertragung in einem Datenpaketübertragungsnetz (14) festgelegt worden ist,
**dadurch gekennzeichnet,**
**dass** die Steuereinheit eine Funktion erbringt, welche automatisch ein Kennzeichen eines das gerufene Endgerät (36) rufenden Endgerätes (16, 100) vermerkt.

15. Signalisierungseinheit (44) nach Anspruch 14,
**dadurch gekennzeichnet,**
**dass** die Signalisierungseinheit (44) mindestens eine weitere Einheit oder Funktion enthält, bei deren Betrieb ein auf die Signalisierungseinheit (44) bezogener Verfahrensschritt nach einem der Ansprüche 1 bis 9 ausgeführt wird.

16. Programm mit einer Befehlsfolge, bei deren Ausführung durch einen Prozessor die Funktion eines Endgerätes (36) nach Anspruch 12 oder 13 oder die Funktion einer Signalisierungseinheit (44) nach Anspruch 14 oder 15 erbracht wird.

## Claims

1. Method for detecting calls,
in which a call request (124) is sent from a calling terminal device (16, 100) by way of a signalling unit (44) to a called terminal device (36), enabling a data transmission between the terminal devices (16, 100; 36),
in which user data is transmitted between the calling terminal device (16, 100) and the called terminal device (36),
**characterised in that**
the signalling unit (44) notes an identifier of the calling terminal device (16, 100), in particular stores the identifier in a memory unit (60), initiates the storage or outputs the identifier on an output unit (62),
that the called terminal device (36) is a terminal device in a data packet transmission network (14),
and that the signalling unit (44) signals in accordance with a signalling protocol which has been defined for a data transmission in a data packet transmission network (14).

2. Method according to claim 1,
**characterised in that**
a detection request (136) is sent to the signalling unit (44) from the called terminal device (36) during the data transmission or in conjunction with the signalling relating to the data transmission,
that the signalling unit (44) notes the identifier on the basis of the detection request (136),
and that the detection request (136) is transmitted with a message and/or with an information element which has been defined for the signalling in the data packet transmission network (14).

3. Method according to claim 1, **characterised in that** an identifier is stored for the called terminal device,
that upon arrival of the call request, a check is performed by the signalling unit (44) as to whether the identifier of the terminal device to be called has been stored,
and that the identifier of the calling terminal device is noted when the identifier of the terminal device to be called (36) has been stored.

4. Method according to claim 1 or 2,
**characterised in that**
the identifier of the calling terminal device (16, 100) is conveyed to the signalling unit (44) in conjunction with the call request (124).

5. Method according to one of claims 1 to 3,
**characterised in that**
the calling terminal device (16) is a terminal device in a circuit-switched data transmission network (12),
and/or that the identifier of the calling terminal device (16) is requested as a result of the detection request (136) by the signalling unit (44) by way of a network transition unit (48) to the circuit-switched data transmission network (12) with the aid of an identifier request,
and/or that in order to process the identifier request in the circuit-switched data transmission network (12) a standard method is used, in particular in accordance with standard ITU-T Q.731.7,
and/or that the identifier request is transmitted in accordance with at least one of the standards Q.1902.1 to Q.1.902.6 and/or in accordance with SIP-T.

6. Method according to one of claims 1 to 4,
**characterised in that**
the calling terminal device (100) is a terminal device in a data packet transmission network (14),
and that the signalling unit (44) or another signalling unit (102) checks the access authorisation of the calling terminal device (100) for the data packet transmission network (14).

7. Method according to one of the preceding claims,
**characterised in that**
the signalling protocol is the SIP protocol or the ITU-T H.225 protocol or another signalling protocol that is suitable for signalling between the terminal device (36) and the signalling unit (44).

8. Method according to one of the preceding claims,
**characterised in that**
the detection request is transmitted in an INFO message using the INFO method in accordance with RFC 2976,
and that a header section of the INFO message or a body section of the INFO message contains an information element which serves to uniquely identify the detection request (136).

9. Method according to one of claims 1 to 7,
**characterised in that**
the detection request (136) is transmitted in a message using a method in accordance with an RFC defined for the detection of calls or in accordance with an extended H.225 protocol or in accordance with another signalling protocol between the terminal device (36) and the signalling unit (44).

10. Method according to claim 9,
**characterised in that**
the message contains no additional information elements for identifying the detection request (136),
or that the message contains in a header section or in a body section an information element which uniquely identifies the detection request (136).

11. Method according to one of the preceding claims,
**characterised in that**
in addition to the identifier of the calling terminal device (16, 100) the identifier of the called terminal device (36) is noted,
and/or that in the case of a call diversion the identifiers of all terminal devices involved in the call diversion are noted,
and/or that the date and/or the time is noted,
and/or that at least one identifier for the signalling units (44, 102) involved in the call processing is noted,
and/or that identifiers that are relevant to the transmission of the user data by way of the data packet transmission network (14) are stored.

12. Terminal device (36),
having a connection unit for connecting the terminal device (36) to a data packet transmission network (14),
and having a control unit that sends requests to a signalling unit (44),
**characterised in that**
the control unit contains a function that generates a detection request (136) automatically at the instigation of a person operating the terminal device (36), and when this request is processed the signalling unit (44) notes an identifier of a terminal device (16, 100) calling the terminal device (36).

13. Terminal device (36) according to claim 12,
**characterised in that**
the terminal device (36) contains at least one further unit or function, during whose operation a method step according to one of claims 1 to 11 and relating to the called terminal device (36) is performed.

14. Signalling unit (44),
having a control unit that signals in accordance with a signalling protocol that has been defined for a data transmission in a data packet transmission network (14),
**characterised in that** the control unit provides a function that automatically notes an identifier of a terminal device (16, 100) calling the called terminal device (36).

15. Signalling unit (44) according to claim 14,
**characterised in that**
the signalling unit (44) contains at least one further unit or function, during whose operation a method step according to one of claims 1 to 9 and relating to the signalling unit (44) is performed.

16. Program containing an instruction sequence, during whose execution the function of a terminal device (36) according to claim 12 or 13 or the function of a signalling unit (44) according to claim 14 or 15 is provided by a processor.

## Revendications

1. Procédé pour répertorier des appels,
dans lequel une requête d'appel (124) est adressée par un terminal appelant (16, 100) à un terminal appelé (36) via une unité de signalisation (44) pour permettre une transmission de données entre les terminaux (16, 100 ; 36) ;
dans lequel des données utiles sont transmises entre le terminal appelant (16, 100) et le terminal appelé (36), **caractérisé en ce que** :
l'unité de signalisation (44) note un identifiant de l'appareil appelant (16, 100) et, plus particulièrement, stocke l'identifiant dans une unité de mémoire (60), fait effectuer le stockage ou produit l'identifiant en sortie sur une unité de sortie (62) ;
le terminal appelé (36) est un terminal d'un réseau de transmission de paquets de données (14) et
la signalisation par l'unité de signalisation (44) est conforme à un protocole de signalisation déterminé pour une transmission de données dans un réseau de transmission de paquets de données (14).

2. Procédé selon la revendication 1,
**caractérisé en ce que**
pendant la transmission de données ou en rapport avec la signalisation concernant la transmission de données, une requête de répertorisation (136) est adressée par le terminal appelé (36) à l'unité de signalisation (44) ;
étant donné la requête de répertorisation (136), l'unité de signalisation (44) note l'identifiant et
la requête de répertorisation (136) est transmise avec un message et/ou avec un élément d'information qui ont été déterminés pour la signalisation dans le réseau de transmission de paquets de données (14).

3. Procédé selon la revendication 1, **caractérisé en ce que** un identifiant est stocké pour le terminal appelé ;
à l'arrivée de la requête d'appel, l'unité de signalisation (44) examine si l'identifiant du terminal à appeler a été stocké et
l'identifiant du terminal appelant est noté si l'identifiant du terminal à appeler (36) a été stocké.

4. Procédé selon la revendication 1 ou 2, **caractérisé en ce que** l'identifiant du terminal appelant (16, 100) est transmis à l'unité de signalisation (44) en rapport avec la requête d'appel (124).

5. Procédé selon l'une des revendications 1 à 3, **caractérisé en ce que**
le terminal appelant (16) est un terminal d'un réseau de transmission de données à commutation de circuits (12) et/ou
l'identifiant du terminal appelant (16) est demandé à l'aide d'une requête d'identifiant par l'unité de signalisation (44) au réseau de transmission de données à commutation de circuits (12) via une unité d'interconnexion de réseaux (48) sur la base de la requête de répertorisation (136)et/ou
un procédé standardisé, en particulier conforme au standard UIT-T Q.731.7, est mis en oeuvre pour le traitement de la requête d'identifiant dans le réseau de transmission de données à commutation de circuits (12) et/ou
la requête d'identifiant est transmise conformément à au moins l'un des standards Q.1902.1 à Q.1.902.6 et/ou conformément au SIP-T.

6. Procédé selon l'une des revendications 1 à 4, **caractérisé en ce que**
le terminal appelant (100) est un terminal d'un réseau de transmission de paquets de données (14) et
l'unité de signalisation (44) ou une autre unité de signalisation (102) examine l'autorisation d'accès du terminal appelant (100) au réseau de transmission de paquets de données (14).

7. Procédé selon l'une des revendications précédentes, **caractérisé en ce que** le protocole de signalisation est le protocole SIP ou le protocole UIT-T H.225 ou un autre protocole de signalisation approprié pour la signalisation entre le terminal (36) et l'unité de signalisation (44).

8. Procédé selon l'une des revendications précédentes, **caractérisé en ce que**
la requête de répertorisation est transmise dans un message INFO par le procédé INFO conformément au RFC 2976 et
un en-tête du message INFO ou une partie principale du message INFO contiennent un élément d'information permettant le marquage univoque de la requête de répertorisation (136).

9. Procédé selon l'une des revendications 1 à 7, **caractérisé en ce que** la requête de répertorisation (136) est transmise dans un message, par un procédé déterminé pour la répertorisation d'appels, conformément au RFC ou conformément à un protocole élargi H.225 ou conformément à un autre protocole de signalisation entre le terminal (36) et l'unité de signalisation (44).

10. Procédé selon la revendication 9, **caractérisé en ce que**
le message ne contient aucun élément d'information additionnel pour marquer la requête de répertorisation (136) ou
le message contient, dans l'en-tête ou dans une partie principale, un élément d'information qui marque de manière univoque la requête de répertorisation (136).

11. Procédé selon l'une des revendications précédentes, **caractérisé en ce que**
est noté, outre l'identifiant du terminal appelant (16, 100), l'identifiant du terminal appelé (36) et/ou sont notés, en cas de renvoi d'appel, les identifiants de tous les terminaux impliqués dans le renvoi d'appel et/ou
la date et/ou l'heure sont notées et/ou
est noté au moins un identifiant pour les unités de signalisation (44, 102) impliquées dans le traitement de l'appel et/ou
sont stockés des identifiants qui sont pertinents pour la transmission des données utiles via le réseau de transmission de paquets de données (14).

12. Terminal (36), comportant
une unité de raccordement pour le raccordement du terminal (36) à un réseau de transmission de paquets de données (14) et
une unité de commande qui adresse des requêtes à une unité de signalisation (44),
**caractérisé en ce que**
l'unité de commande contient une fonction avec laquelle peut être créée automatiquement, à l'instigation d'un utilisateur du terminal (36), une requête de répertorisation (136) au cours du traitement de laquelle l'unité de signalisation (44) note un identifiant d'un terminal (16, 100) qui appelle le terminal (36).

13. Terminal (36) selon la revendication 12, **caractérisé en ce que** le terminal (36) contient au moins une autre unité ou fonction pendant le fonctionnement de laquelle est exécutée une étape du procédé relative au terminal appelé (36) selon l'une des revendications 1 à 11.

14. Unité de signalisation (44), comportant une unité de commande dont la signalisation est conforme à un protocole de signalisation qui a été déterminé pour une transmission de données dans un réseau de transmission de paquets de données (14), **caractérisée en ce que** l'unité de commande fournit une fonction qui note automatiquement un identifiant d'un terminal (16, 100) qui appelle le terminal appelé (36).

15. Unité de signalisation (44) selon la revendication 14, **caractérisée en ce que** l'unité de signalisation (44) contient au moins une autre unité ou fonction pendant le fonctionnement de laquelle est exécutée une étape du procédé relative à l'unité de signalisation (44) selon l'une des revendications 1 à 9.

16. Programme comportant une suite de commandes telle qu'est fournie, lors de son exécution par un processeur, la fonction d'un terminal (36) selon la revendication 12 ou 13 ou la fonction d'une unité de signalisation (44) selon la revendication 14 ou 15.
